# EUROPÄISCHE PATENTSCHRIFT

(11) **EP 3 007 818 B1**
(45) Veröffentlichungstag und Bekanntmachung des Hinweises auf die Patenterteilung: **09.08.2017**
(21) Anmeldenummer: 14729018.3
(22) Anmeldetag: 11.06.2014
(51) Int. Cl.: B01J 19/00, B01J 19/18, C08F 2/00, C08G 69/28, C08L 77/06

(54) **POLYMERISATIONSVERFAHREN UNTER ABSCHEIDUNG EINER GASFÖRMIGEN SUBSTANZ**
METHOD OF POLYMERISATION UNDER SEPARATION OF A GASEOUS SUBSTANCE
PROCÉDÉ DE POLYMÉRISATION AVEC SÉPARATION D'UNE SUBSTANCE GAZEUSE

(30) Priorität: 12.06.2013 EP 13171654
(43) Veröffentlichungstag der Anmeldung: 20.04.2016
(73) Patentinhaber: BASF SE, 67056 Ludwigshafen am Rhein (DE)
(72) Erfinder: ZHU, Ning, 68163 Mannheim (DE); STAMMER, Achim, 67251 Freinsheim (DE); CLAUSS, Joachim, 64297 Darmstadt (DE); KORY, Gad, 69251 Gaiberg (DE)
(86) Internationale Anmeldenummer: PCT/EP2014/062122
(87) Internationale Veröffentlichungsnummer: WO 2014/198768

(56) Entgegenhaltungen:
- EP-A1- 0 267 025
- EP-A1- 2 471 594
- DE-B3-102006 047 942
- FR-A1- 2 335 552
- US-A- 2 993 842
- US-A- 3 545 938

## Beschreibung

Die vorliegende Erfindung betrifft ein Verfahren zur Herstellung eines aliphatischen oder teilaromatischen Polyamids, bei dem man ein Polyamidpräpolymer einer Festphasenpolymerisation unterzieht.

Weiterhin betrifft die vorliegende Erfindung ein Verfahren zur Synthese eines Polymers, insbesondere eines Polyamids, unter Abscheidung einer gasförmigen Substanz, insbesondere von Wasser.

### STAND DER TECHNIK

Die Herstellung einer Vielzahl technischer Polymere erfolgt durch eine Polykondensation, bei der der Molekulargewichtsaufbau mit der Freisetzung einer niedermolekularen Komponente einhergeht, die in der Regel zumindest teilweise aus dem Reaktionsgemisch entfernt werden muss, z. B. um das angestrebte Molekulargewicht und/oder die angestrebten Produkteigenschaften zu erzielen.

Eine wichtige Klasse der Polykondensationspolymere sind die Polyamide. Sie dienen neben den Hauptanwendungsbereichen Folien, Fasern und Werkstoffen einer Vielzahl weiterer Verwendungszwecke. Unter den Polyamiden sind das Polyamid 6 (Polycaprolactam) und das Polyamid 66 (Nylon, Polyhexamethylenadipinsäureamid) die am meisten hergestellten Polymere. Die Herstellung von Polyamid 66 erfolgt überwiegend durch Polykondensation sogenannter AH-Salzlösungen, d. h. von wässrigen Lösungen, die Adipinsäure und 1,6-Diaminohexan (Hexamethylendiamin) in stöchiometrischen Mengen enthalten. Das klassische Verfahren zur Herstellung von Polyamid 6 ist die hydrolytische ringöffnende Polymerisation von ε-Caprolactam, die immer noch von sehr großer technischer Bedeutung ist. Konventionelle Herstellverfahren für Polyamid 6 und Polyamid 66 sind z. B. in Kunststoffhandbuch, ¾ Technische Thermoplaste: Polyamide, Carl Hanser Verlag, 1998, München, S. 42-71, beschrieben.

Eine spezielle Klasse technischer Kunststoffe, die breite Verwendung gefunden haben, sind teilkristalline oder amorphe, thermoplastische, teilaromatische Polyamide, die sich insbesondere durch ihre hohe Temperaturbeständigkeit auszeichnen und daher auch als Hochtemperatur-Polyamide (HTPA) bezeichnet werden.

Speziell bei der Synthese von Hochtemperaturpolyamiden ist es notwendig, Wasser aus der Reaktionsschmelze zu entfernen. So beginnt die Herstellung dieser HTPA in der Regel mit der Bildung einer wässrigen Salzlösung aus wenigstens einem Diamin und wenigstens einer Dicarbonsäure sowie optional weiteren Monomerkomponenten, wie Lactamen, ω-Aminosäuren, Monoaminen, Monocarbonsäuren und Mischungen davon, mit der Maßgabe, dass wenigstens eine der Komponenten eine aromatische Gruppe aufweist. An die Bildung der Salzlösung schließt sich dann eine Oligomerisierung in der flüssigen Phase an, während der in der Regel noch keine Abtrennung von Wasser erfolgt. Am Ende dieser Oligomerisierung weisen die Oligomere im Mittel beispielsweise 4 bis 10 Wiederholungseinheiten bei einem Umsatz von etwa 70 bis 80 % auf. Zum weiteren Molekulargewichtsaufbau stehen dann zwei alternative Routen zur Verfügung. In der ersten Variante wird das gebildete Oligomer durch Entwässerung in die feste Phase überführt und einer sogenannten Festphasenpolymerisation (solid state polymerization, SSP) unterzogen. In der zweiten Variante erfolgt unter kontrollierter Wasserabtrennung und Temperaturerhöhung eine Überführung der wässrigen Lösung in die Schmelze zur weiteren Polykondensation. Es besteht insbesondere ein Bedarf an geeigneten Vorrichtungen und Verfahren zur Durchführung dieser Schmelzekondensation.

Es ist beispielsweise bekannt, eine Oligomerschmelze, die Wasser enthält, in einem Reaktor bei einer Temperatur von ca. 350 °C und einem Druck im Bereich von 10 bis 20 bar zur Reaktion zu bringen. Hierbei kommt es allerdings zu Ablagerungen an den Reaktorinnenwänden oberhalb der flüssigen Phase. Dies führt zu einer verschlechterten Produktqualität.

Im Patent US 2,689,839 wird beschrieben, eine Polyamidschmelze durch Rohre mit unterschiedlichem Durchmesser zu leiten und dabei zu tempern. Die Rohre werden immer breiter, so dass eine langsame Entspannung am Austrag des letzten Rohres erfolgt, welcher über eine Förderschnecke vorgenommen wird. Dieses Verfahren hat allerdings den Nachteil, dass Wasserdampf durch die Förderschnecke aus der Polyamidschmelze austritt, wobei es zu einem Schäumen der Polyamidschmelze kommen kann.

Das Patent US 3,113,843 beschreibt ein Verfahren zur Synthese eines Polyamids unter Wasserdampfabscheidung, bei dem eine vertikale Förderschnecke verwendet wird. Diese reinigt kontinuierlich mechanisch die innere Oberfläche des verwendeten Reaktors.

Weiterhin ist die Polyamidsynthese in einem Fallfilmreaktor bekannt. Ein Oligomerfilm wird dabei auf eine große Innenoberfläche eines Reaktors verteilt, wobei die Oligomerzuführung über ein Rohr und optional zusätzlich auch über einen höher gelegenen Filmeinlass erfolgt. Hiermit wird das Problem einer Schaumbildung in der Schmelze durch Ausgasen von Wasser in der Nähe der Auslassöffnung des Reaktors vermieden. Allerdings können sich in diesem Fall oberhalb des Einlasses für die Schmelze Ablagerungen im Reaktorinnenraum bilden. Ein derartiger Fallfilmreaktor wird beispielsweise in der US 5,561,987 A beschrieben.

Um die gesamte Innenfläche des Fallfilmreaktors mit der Oligomerschmelze bedecken zu können, wird im Patent US 7,964,059 B2 vorgeschlagen die Oligomerschmelze mechanisch auf die Innenfläche aufzutragen. Die hierzu verwendete Vorrichtung weist allerdings viele bewegliche Teile und damit eine hohe Oberfläche auf, was zur Bildung von Ablagerungen führt.

Die Dokumente EP 2471594 A1 beschreibt einen Reaktor umfassend ein im Wesentlichen rohrförmiges Reaktorgehäuse und ein Verfahren zur kontinuierlichen Polymerisation.

US 2993842 A beschreibt eine Vorrichtung für die Destillation von Flüssigkeiten und ein Verfahren für die fraktionierende Destillation von Flüssigkeiten.

EP 0267025 A1 beschreibt einen Dünnschichtverdampfer für hochviskose Fluide mit einer Behandlungskammer, welche von einem Heiz- oder Kühlmantel umgeben und einem koaxialen Rotor ausgestattet ist.

DE 102006047942 B3 beschreibt eine Vorrichtung mit einem horizontal angeordneten zylinderförmigen Reaktorgehäuse und ein Verfahren für die chargenweise Polykondensation von Polymeren.

FR 2335552 A1 beschreibt eine Verfahren und eine Vorrichtung zur Herstellung von Polykondensaten.

US 3545938 A beschreibt einen vertikalen, zylindrischen chemischen Druckreaktor zur Herstellung und Verarbeitung von viskosen Materialien.

### ZUSAMMENFASSUNG DER ERFINDUNG

Der Gegenstand der Erfindung ist ein kontinuierliches Verfahren zur Synthese eines Polymers unter Abscheidung einer gasförmigen Substanz in einer Vorrichtung umfassend
- einen Reaktionsraum (1), der einen oberen Abschnitt (11), einen mittleren Abschnitt (12) und einen unteren Abschnitt (13) aufweist,
- eine Einlassöffnung (2) die in dem mittleren Abschnitt (12) angeordnet ist, eine erste Auslassöffnung (3), die in dem unteren Abschnitt (13) angeordnet ist,
- eine zweite Auslassöffnung (4), die im oberen Abschnitt (11) angeordnet 10 ist,
- eine erste Rücklauföffnung (51), die in dem unteren Abschnitt (13) angeordnet ist,
- eine zweite Rücklauföffnung (52), die unterhalb des oberen Abschnitts (11) angeordnet ist, wobei die erste Rücklauföffnung (51) und die zweite Rücklauföffnung (52) durch eine Rücklaufleitung (5) miteinander verbunden sind, in der eine Pumpe (53) angeordnet ist, die dazu eingerichtet ist, um eine Flüssigkeit von der ersten Rücklauföffnung (51) zu der zweiten Rücklauföffnung (52) zu transportieren,
- eine Verteileinrichtung (6), die den mittleren Abschnitt (12) zu dem oberen Abschnitt (11) abgrenzt, und
- eine Abtrageeinrichtung (7), die entlang des oberen Abschnitts (11) verfahrbar angeordnet ist, wobei die Abtrageeinrichtung (7) einen Abtragekopf (71) aufweist, der an der deckenseitigen Innenwand des mittleren Abschnitts (12) angeordnet ist und wobei der Abtragekopf (71) die deckenseitige Innenwand des mittleren Abschnitts (12) unter Deformation der Ränder des Abtragekopfes (71) kontaktiert, wobei
- die Einlassöffnung (2) mittels einer Einlassleitung (21) mit einer Wand des oberen Abschnitts (11) verbunden ist, wobei der Abtragekopf (71) eine Öffnung (711) aufweist, durch welche die Einlassleitung (21) geführt ist,
mit den folgenden Verfahrensschritten:
a) Zufuhren einer Präpolymerschmelze (8) in einen mittleren Abschnitt (12) eines Reaktionsraums (1) durch eine Einlassöffnung (2),
b) Transportieren eines Teils der Präpolymerschmelze (8) aus einem unterhalb des mittleren Abschnitts (12) angeordneten unteren Abschnitt (13) des Reaktionsraums (1) in einen oberen Abschnitt (11) des Reaktionsraums oberhalb des mittleren Abschnitts (12) und Verteilen der Präpolymerschmelze (8) über die Innenwand des mittleren Abschnitts (12) mittels einer Verteileinrichtung (6),
c) Polymerisation der Präpolymerschmelze (8) zu einer Polymerschmelze,
d) Entfernen der Polymerschmelze aus dem Reaktionsraum (1) durch eine erste Auslassöffnung (3) des Reaktionsraums (1), und
e) Entfernen einer gasförmigen Substanz (9) aus dem Reaktionsraum (1) durch eine zweite Auslassöffnung (4) in dem oberen Abschnitt (11),
wobei Ablagerungen an mindestens einer Innenwand des oberen Abschnitts (11) von einer Abtrageeinrichtung (7) entfernt werden.

Eine spezielle Ausführungsform des erfindungsgemäßen Verfahren ist. ein Verfahren zur Synthese eines aliphatischen oder teilaromatischen Polyamids, bei dem man ein Präpolymer des aliphatischen oder teilaromatischen Polyamids bereitstellt und der erfindungsgemäß eingesetzten Vorrichtung zuführt. In einer bevorzugten Ausführungsform der Erfindung umfasst die Vorrichtung des erfindungsgemäßen Verfahrens zur Synthese eines Polymers unter Abscheidung einer gasförmigen Substanz einen Reaktionsraum, der einen oberen Abschnitt, einen mittleren Abschnitt und einen unteren Abschnitt aufweist, wobei der mittlere Abschnitt in Richtung des unteren Abschnitts durch ein bei Betrieb der Vorrichtung im unteren Abschnitt angeordnetes Flüssigkeitsniveau eines Sumpfes einer Oligomerschmelze begrenzt wird.

### BESCHREIBUNG DER ERFINDUNG

Ein Präpolymer bezeichnet im Sinne der Erfindung eine Zusammensetzung, die polymere Verbindungen mit komplementären funktionellen Gruppen enthält, die zu einer Kondensationsreaktion unter Molekulargewichtserhöhung befähigt sind.

Der Begriff "Präpolymerschmelze" bezeichnet im Sinne der Erfindung eine fließfähige Zusammensetzung des jeweils vorliegenden Reaktionsgemischs, das die Präpolymere enthält. Dabei muss die Temperatur der Präpolymerschmelze nicht zwingend oberhalb der Schmelztemperatur des reinen Präpolymers liegen. Die Fließfähigkeit kann auch durch die Anwesenheit anderer Komponenten der Präpolymerschmelze, wie z. B. Wasser, niedermolekularer Oligomere, etc., gegeben sein. In einer speziellen Ausführungsform liegt in der Präpolymerschmelze das Präpolymer selbst schmelzförmig vor.

Die Angaben des zahlenmittleren Molekulargewichts Mₙ und des gewichtsmittleren Molekulargewichts M_{w} im Rahmen dieser Erfindung beziehen sich auf eine Bestimmung mittels Gelpermeationschromatographie (GPC). Zur Kalibrierung wurde PMMA als Polymerstandard mit niedriger Polydispersität eingesetzt.

Durch das erfindungsgemäße Verfahren wird die Bildung von Ablagerungen in dem Reaktionsraum in dem Bereich zwischen dem oberen Abschnitt und dem mittleren Abschnitt durch die Abtrageeinrichtung und im mittleren und gegebenenfalls unteren Abschnitt durch einen an der Innenwand des Reaktionsraums gebildeten gleichmäßigen Präpolymerfilm verhindert. Da es nicht notwendig ist, das Verfahren zu unterbrechen, um Ablagerungen manuell zu entfernen, kann es daher insbesondere kontinuierlich durchgeführt werden.

Die erste Rücklauföffnung und die zweite Rücklauföffnung des erfindungsgemäßen Verfahrens können insbesondere durch eine Rücklaufleitung miteinander verbunden werden, in der eine Pumpe angeordnet ist. Diese ist dazu eingerichtet, um eine Flüssigkeit von der ersten Rücklauföffnung zu der zweiten Rücklauföffnung zu transportieren. Das erfindungsgemäße Verfahren ermöglicht unter Anwendung des bekannten Prinzips eines Fallfilmreaktors die Vermeidung der Bildung von Ablagerungen im mittleren Abschnitt und im unteren Abschnitt, da eine über die Rücklaufleitung in den oberen Abschnitt transportierte Schmelze von der Verteileinrichtung gleichmäßig über die Innenwand des mittleren Abschnitts und gegebenenfalls zum unteren Abschnitt verteilt werden kann. Die Bildung von Ablagerungen im oberen Abschnitt wird erfindungsgemäß durch das Verfahren der Abtrageeinrichtung verhindert.

Die Abtrageeinrichtung weist einen Abtragekopf auf, der an der deckenseitigen Innenwand des mittleren Abschnitts angeordnet ist. Besonders bevorzugt nimmt die Dicke des Abtragekopfes zu mindestens einem seiner Ränder hin ab. Auf diese Weise kann eine Flexibilität des Abtragekopfes an seinen Rändern erzeugt werden. Besonders bevorzugt weist der Abtragekopf senkrecht zur Verfahrrichtung der Abtrageeinrichtung eine Querschnittsfläche auf, die größer ist als die deckenseitige Querschnittsfläche des mittleren Abschnitts senkrecht zur Verfahrrichtung der Abtrageeinrichtung. Der Abtragekopf kontaktiert die deckenseitige Innenwand des mittleren Abschnitts unter Deformation seiner Ränder, wodurch ein hoher Druck auf die Innenwand des Reaktionsraums ausgeübt wird und es möglich ist, auch sehr fest sitzende Ablagerungen zu entfernen. Besonders bevorzugt weist der Abtragekopf senkrecht zur Verfahrrichtung der Abtrageeinrichtung eine Querschnittsfläche auf, welche wenigstens die Querschnittsfläche einer Einlassleitung senkrecht zur Verfahrrichtung der Abtrageeinrichtung überdeckt. Der Abtragekopf weist vorzugsweise Öffnungen auf, die den Durchtritt der gasförmigen Substanz ermöglichen. Alternativ kann der Abtragekopf erfindungsgemäß auch als Messer bzw. Rakel ausgeführt sein. Weiterhin ist es möglich, dass die Abtrageeinrichtung aus einem Seil besteht. Der Abtragekopf erlaubt es, die Ablagerung auf der Innenwand effektiv zu beseitigen. Dabei hat der Abtragekopf selbst möglichst eine kleine Oberfläche, damit keine oder möglichst wenig Ablagerungen auf dem Abtragekopf selbst entstehen.

Die Einlassöffnung des erfindungsgemäßen Verfahrens ist in einer speziellen Ausführung mittels der Einlassleitung mit einer Wand des oberen Abschnitts verbunden, wobei die Einlassleitung durch eine Öffnung in dem Abtragekopf geführt ist.

Der Querschnitt des unteren Abschnitts verringert sich vorzugsweise vom mittleren Abschnitt in Richtung der ersten Auslassöffnung hin.

Um Wärmeverluste zu vermeiden und im Falle einer Beschädigung des Reaktors den Austritt einer Polymerschmelze zu verhindern, ist der Reaktionsraum vorzugsweise doppelwandig ausgeführt.

Um eine vollständige Benetzung der Innenwand des Reaktionsraums unterhalb der Verteileinrichtung mit Oligomer zu gewährleisten, ist es bevorzugt, dass die Viskosität der Oligomerschmelze mindestens 1 mPa·s beträgt.

Vorzugsweise ist das erfindungsgemäße Verfahren im Wesentlichen vertikal ausgerichtet ist. Unter einer vertikalen Ausrichtung wird eine im Wesentlichen senkrechte Ausrichtung der erfindungsgemäßen Vorrichtung im Gravitationsfeld verstanden. Unter im Wesentlichen senkrecht wird eine Abweichung von höchstens 10°, bevorzugt von höchstens 5°, bezogen auf eine ideal vertikale Ausrichtung verstanden.

Um ein sicheres Entfernen der Polymerschmelze aus dem Reaktionsraum zu ermöglichen, ist es bevorzugt, dass die Geschwindigkeit, mit der sich die Polymerschmelze auf die erste Auslassöffnung zubewegt, mit sinkendem Abstand zu der ersten Auslassöffnung zunimmt.

Grundsätzlich kann das erfindungsgemäße Verfahren mit jedem Polymer durchgeführt werden, dass sich in eine Schmelze überführen lässt. Bevorzugt ist das Polymer ausgewählt unter thermoplastischen Polymeren. Besonders bevorzugt ist das Polymer ausgewählt unter Polyamiden, thermoplastischen Polyurethanen, Polyolefinen, vinylaromatischen Polymeren, Polyestern, Polyacetalen, Polycarbonaten, Polysulfonen, Polyethersulfonen und Mischungen davon.

Vorzugsweise ist das Polymer ein Polyamid und die gasförmige Substanz ist Wasserdampf.

Eine spezielle Ausführungsform des erfindungsgemäßen Verfahrens ist daher ein Verfahren zur Synthese eines aliphatischen oder teilaromatischen Polyamids, bei dem man in Schritt a) ein Präpolymer des aliphatischen oder teilaromatischen Polyamids bereitstellt und der erfindungsgemäß eingesetzten Vorrichtung zuführt.

Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 genormt. Polyamide, die sich von Aminocarbonsäuren des Typs H₂N-(CH₂)ₓ-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA Z1 Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet: T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methy-lenbis-(cyclohexylamin).

Im Folgenden umfasst der Ausdruck "C₁-C₄-Alkyl" unsubstituierte geradkettige und verzweigte C₁-C₄-Alkylgruppen. Beispiele für C₁-C₄-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aromatischen Dicarbonsäuren, aliphatischen Dicarbonsäuren, cycloaliphatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt C₁-C₄-Alkylester, insbesondere die Methylester oder Ethylester. Dicarbonsäuren liegen bevorzugt als Mono- oder Dialkylester, besonders bevorzugt Mono- oder Di-C₁-C₄-alkylester, besonders bevorzugt Monomethylester, Dimethylester, Monoethylester oder Diethylester vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen C₁-C₄-Alkylkomponenten, insbesondere Methylethylester vor.

Die Bereitstellung des Polyamid-Präpolymers erfolgt durch Polykondensation einer wässrigen Zusammensetzung, die wenigstens eine zur Polyamidbildung geeignete Komponente enthält.

Bevorzugt enthält das Präpolymer (und dementsprechend das aliphatische oder teilaromatische Polyamid) Komponenten eingebaut, die ausgewählt sind unter
A) unsubstituierten oder substituierten aromatischen Dicarbonsäuren und Derivaten von unsubstituierten oder substituierten aromatischen Dicarbonsäuren,
B) unsubstituierten oder substituierten aromatischen Diaminen,
C) aliphatischen oder cycloaliphatischen Dicarbonsäuren und Derivaten davon,
D) aliphatischen oder cycloaliphatischen Diaminen,
E) Monocarbonsäuren und Derivaten davon,
F) Monoaminen,
G) mindestens dreiwertigen Aminen,
H) Lactamen,
I) ω-Aminosäuren,
K) von A) bis I) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten C) oder D) vorhanden sein muss und keine der Komponenten A) und B) vorhanden sein darf. Für aliphatische Polyamide vom Typ PA Z (wie PA 6 oder PA 12) gilt die Maßgabe, dass mindestens die Komponente H) vorhanden sein muss.

Eine bevorzugte Ausführungsform sind teilaromatische Polyamide. Für teilaromatische Polyamide gilt die Maßgabe, dass mindestens eine der Komponenten A) oder B) und mindestens eine der Komponenten C) oder D) vorhanden sein muss.

Die aromatischen Dicarbonsäuren A) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren A) weisen vorzugsweise wenigstens einen (z. B. 1, 2, 3 oder 4) C₁-C₄-Alkylrest auf. Insbesondere weisen substituierte aromatischen Dicarbonsäuren A) 1 oder 2 C₁-C₄-Alkylreste auf. Diese sind vorzugsweise ausgewählt unter Methyl, Ethyl, n-Propyl, Isopropyl, n-Butyl, iso-Butyl, sek-Butyl und tert-Butyl, besonders bevorzugt Methyl, Ethyl und n-Butyl, insbesondere Methyl und Ethyl und speziell Methyl. Substituierte aromatische Dicarbonsäuren A) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure A) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfoisophthalsäure.

Besonders bevorzugt wird als aromatische Dicarbonsäure A) Terephthalsäure, Isophthalsäure oder ein Gemisch aus Terephthalsäure und Isophthalsäure eingesetzt.

Bevorzugt weisen die erfindungsgemäß bereitgestellten teilaromatischen Polyamid-Präpolymere einen Anteil von aromatischen Dicarbonsäuren an allen Dicarbonsäuren von wenigstens 50 Mol%, besonders bevorzugt von 70 Mol% bis 100 Mol%, auf. In einer speziellen Ausführungsform weisen die nach dem erfindungsgemäßen Verfahren hergestellten teilaromatischen Polyamide (und die in Schritt a) bereitgestellten Präpolymere), einen Anteil an Terephthalsäure oder Isophthalsäure oder einem Gemisch aus Terephthalsäure und Isophthalsäure, bezogen auf alle Dicarbonsäuren von wenigstens 50 Mol%, bevorzugt von 70 Mol% bis 100 Mol%, auf.

Die aromatischen Diamine B) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren C) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-α,ω-carbonsäure, Dodecan-α,ω-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine D) sind vorzugsweise ausgewählt unter Ethylendiamin, Propylendiamin, Tetramethylendiamin, Heptamethylendiamin, Hexamethylendiamin, Pentamethylendiamin, Octamethylendiamin, Nonamethylendiamin, 2-Methyl-1,8-octamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin D) ausgewählt unter Hexamethylendiamin, 2-Methylpentamethylendiamin, Octamethylendiamin, Nonamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin D) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin D) ausschließlich Hexamethylendiamin einpolymerisiert.

In einer weiteren speziellen Ausführung enthalten die teilaromatischen Polyamide als Diamin D) ausschließlich Bis-(4-aminocyclohexyl)-methan einpolymerisiert.

In einer weiteren speziellen Ausführung enthalten die teilaromatischen Polyamide als Diamin D) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin D) ausschließlich Isophorondiamin (IPDA) einpolymerisiert.

Die Präpolymere (und entsprechend die aliphatischen und die teilaromatischen Polyamide) können wenigstens eine Monocarbonsäure E) einpolymerisiert enthalten. Die Monocarbonsäuren E) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren E) sind aliphatische Monocarbonsäuren, alicyclische Monocarbonsäuren und aromatische Monocarbonsäuren. Dazu zählen Essigsäure, Propionsäure, n-, isooder tert.-Buttersäure, Valeriansäure, Trimethylessigsäure Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure Cyclohexancarbonsäure, Benzoesäure, Methylbenzoesäuren, α-Naphthalincarbonsäure, β-Naphthalincarbonsäure, Phenylessigsäure, Ölsäure, Ricinolsäure, Linolsäure, Linolensäure, Erucasäure, Fettsäuren aus Soja, Leinsamen, Ricinus und Sonnenblume, Acrylsäure, Methacrylsäure, Versatic^{®}-Säuren, Koch^{®}-Säuren und Mischungen davon.

Werden als Monocarbonsäuren E) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure E) ausgewählt unter Essigsäure, Propionsäure, Benzoesäure und Mischungen davon.

In einer speziellen Ausführung enthalten die Präpolymere (und entsprechend die aliphatischen und die teilaromatischen Polyamide) als Monocarbonsäure E) ausschließlich Propionsäure einpolymerisiert.

In einer weiteren speziellen Ausführung enthalten die Präpolymere (und entsprechend aliphatischen und die teilaromatischen Polyamide) als Monocarbonsäure E) ausschließlich Benzoesäure einpolymerisiert.

In einer weiteren speziellen Ausführung enthalten die Präpolymere (und entsprechend die aliphatischen und die teilaromatischen Polyamide) als Monocarbonsäure E) ausschließlich Essigsäure einpolymerisiert.

Die Präpolymere (und entsprechend die aliphatischen und die teilaromatischen Polyamide) können wenigstens ein Monoamin F) einpolymerisiert enthalten. Dabei enthalten die aliphatischen Polyamide nur aliphatische Monoamine oder alicyclische Monoamine einpolymerisiert. Die Monoamine F) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine F) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der Präpolymere (und entsprechend der aliphatischen und der teilaromatischen Polyamide) kann zusätzlich wenigstens ein mindestens dreiwertiges Amin G) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]-methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine G) eingesetzt.

Geeignete Lactame H) sind ε-Caprolactam, 2-Piperidon (δ-Valerolatam), 2-Pyrrolidon (γ-Butyrolactam), Capryllactam, Önanthlactam, Lauryllactam und Mischungen davon.

Geeignete ω-Aminosäuren I) sind 6-Aminocapronsäure, 7-Aminoheptansäure, 11-Aminoundecansäure, 12-Aminododecansäure und Mischungen davon.

Geeignete von A) bis I) verschiedene, damit cokondensierbare Verbindungen K) sind wenigstens dreiwertige Carbonsäuren, Diaminocarbonsäuren, etc.

Geeignete Verbindungen K) sind weiterhin 4-[(Z)-N-(6-Aminohexyl)-C-hydroxy-carbonimidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)methyl]-C-hydroxy-carbonimidoyl]benzoesäure, 3-[(Z)-N-[(5-Amino-1,3,3-trimethyl-cyclohexyl)methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

In einer bevorzugten Ausführungsform dient das erfindungsgemäße Verfahren zur Herstellung eines aliphatischen Polyamids.

Das Polyamid ist dann vorzugsweise ausgewählt ist unter PA 6, PA 11, PA 12, PA 46, PA 66, PA 666, PA 69, PA 610, PA 612, PA 96, PA 99, PA 910, PA 912, PA 1212, und Copolymeren und Gemischen davon.

Insbesondere handelt es sich bei dem aliphatischen Polyamid um PA 6, PA 66 oder PA 666, ganz besonders bevorzugt um PA 6.

In einer weiteren bevorzugten Ausführungsform dient das erfindungsgemäße Verfahren zur Herstellung eines teilaromatischen Polyamids.

Bevorzugt ist das Polyamid dann ausgewählt unter PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA6.T/6.10, PA6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Besonders bevorzugt ist das Polyamid dann ausgewählt unter PA 6.T, PA 9.T, PA 10.T, PA 12.T, PA 6.I, PA 9.I, PA 10.I, PA 12.I, PA 6.T/6.I, PA 6.T/6, PA6.T/8.T, PA 6.T/10T, PA 10.T/6.T, PA 6.T/12.T, PA12.T/6.T, PA IPDA.I, PA IPDA.T, PA 6.T/IPDA.T, PA 6.T/6.1/IPDA.T/IPDA.I, PA 6.T/10.T/IPDA.T,
PA 6.T/12.T/IPDA.T, PA 6.T/10.T/PACM.T, PA 6.T/12.T/PACM.T, PA 10.T/IPDA.T, PA 12.T/IPDA.T
und Copolymeren und Gemischen davon.

In einer speziellen Ausführung handelt es sich bei dem teilaromatischen Polyamid um PA 6.T/6.I.
In einer weiteren speziellen Ausführung handelt es sich bei dem teilaromatischen Polyamid um PA 6.T/6.I/IPDA.T/IPDA.I.
In einer weiteren speziellen Ausführung handelt es sich bei dem teilaromatischen Polyamid um PA 6.T/6.I/MXDA.T/MXDA.I.

Zur Herstellung der bereitgestellten Präpolymere wird im Allgemeinen eine wässrige Zusammensetzung eingesetzt, die wenigstens eine zur Polyamidbildung geeignete Komponente enthält. Die Herstellung der Präpolymere kann grundsätzlich nach üblichen, dem Fachmann bekannten Verfahren erfolgen. Ein geeignetes Verfahren zur Herstellung von teilaromatischen Polyamid-Oligomeren ist z. B. in der EP 0 693 515 A1 beschrieben.

Die zum Einsatz in dem erfindungsgemäßen Verfahren bereitgestellten Präpolymere (speziell die Polyamid-Präpolymere) weisen vorzugsweise ein zahlenmittleres Molekulargewicht Mₙ von etwa 500 bis etwa 12000 g/mol auf, bevorzugt von etwa 1000 bis 4000 g/mol.

Grundsätzlich kann das erfindungsgemäße Verfahren in jeder hierfür geeigneten Vorrichtung durchgeführt werden. Vorzugsweise wird es allerdings in der oben beschriebenen erfindungsgemäßen Vorrichtung durchgeführt.

Wird das erfindungsgemäße Verfahren zur Herstellung aliphatischer Polyamide eingesetzt, weisen diese vorzugsweise ein zahlenmittleres Molekulargewicht Mₙ in einem Bereich von 13000 bis 28000 g/mol auf.

Wird das erfindungsgemäße Verfahren zur Herstellung teilaromatischer Polyamide eingesetzt, weisen diese vorzugsweise ein zahlenmittleres Molekulargewicht Mₙ in einem Bereich von 13000 bis 25000 g/mol, besonders bevorzugt von 15000 bis 20000 g/mol, auf.

Die nach dem erfindungsgemäßen Verfahren erhaltenen aliphatischen Polyamide weisen vorzugsweise ein gewichtsmittleres Molekulargewicht M_{w} in einem Bereich von 20000 bis 140000 g/mol auf.

Die nach dem erfindungsgemäßen Verfahren erhaltenen teilaromatischen Polyamide weisen vorzugsweise ein gewichtsmittleres Molekulargewicht M_{w} in einem Bereich von 25000 bis 125000 g/mol auf.

Die nach dem erfindungsgemäßen Verfahren erhaltenen aliphatischen und teilaromatischen Polyamide weisen vorzugsweise eine Polydispersität PD (= M_{w}/Mₙ) von höchstens 6, besonders bevorzugt von höchstens 5, insbesondere von höchstens 3,5, auf.

### FIGURENBESCHREIBUNG UND BEISPIELE

Die Erfindung wird nun anhand von Ausführungsbeispielen mit Bezug zu den Zeichnungen erläutert.
Fig. 1 zeigt einen Schnitt durch eine Vorrichtung gemäß einer Ausführungsform des erfindungsgemäßen Verfahrens.
Fig. 2 zeigt eine Aufsicht auf den Abtragekopf der Vorrichtung gemäß Fig. 1.
Fig. 3 zeigt eine Detailzeichnung der Abtrageeinrichtung mit einem Abtragekopf gemäß Figuren 1 und 2.
Fig. 4 zeigt eine Vorrichtung gemäß einer anderen Ausführungsform des erfindungsgemäßen Verfahrens

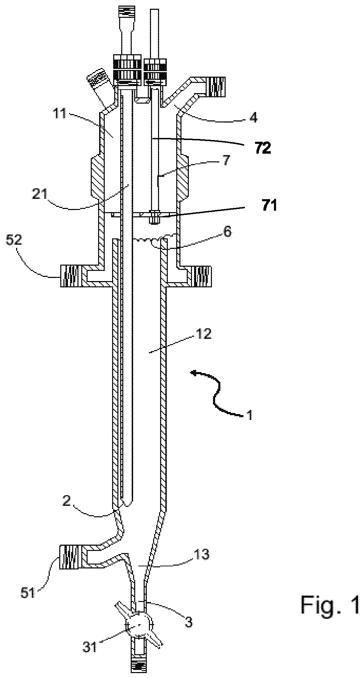

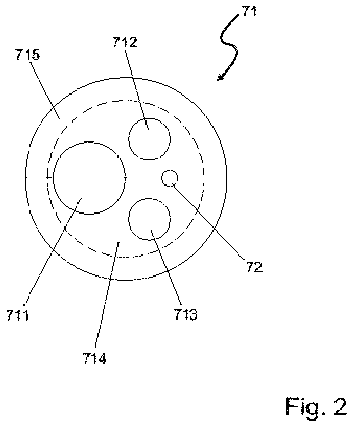

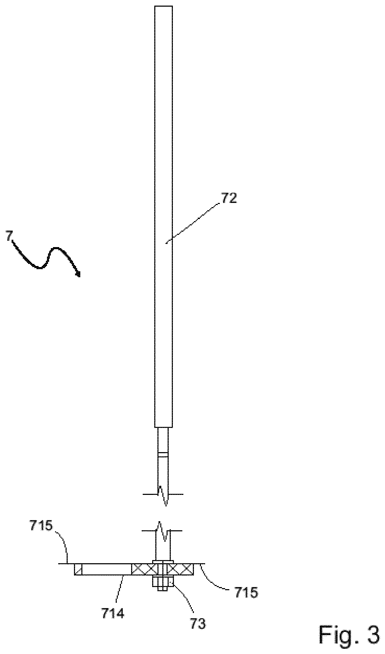

In den Fig. 1 bis 3 ist eine Ausführungsform des erfindungsgemäßen Verfahrens zur Synthese eines Polymers unter Abscheidung einer gasförmigen Substanz dargestellt. Ein Reaktionsraum 1 ist in einen zylinderförmigen oberen Abschnitt 11, einen zylinderförmigen mittleren Abschnitt 12 und einen unteren Abschnitt 13 unterteilt. Durch die Oberseite des oberen Abschnitts 11 ist eine Einlassleitung 21 geführt, die im mittleren Abschnitt 12 in einer Einlassöffnung 2 endet. Die Unterseite des unteren Abschnitts 13 endet in einer ersten Auslassöffnung 3, die mit einem Absperrhahn 31 verschlossen werden kann. Der Querschnitt des unteren Abschnitts 13 verringert sich vom mittleren Abschnitt 12 zu der ersten Auslassöffnung 3 hin. Eine zweite Auslassöffnung 4 ist im oberen Abschnitt 11 angeordnet. Im unteren Abschnitt 13 ist eine erste Rücklauföffnung 51 angeordnet und im oberen Abschnitt 11 ist eine zweite Rücklauföffnung 52 angeordnet. Deckenseitig ist im mittleren Abschnitt 12 eine Verteileinrichtung 6 angeordnet. Diese ist als Zahnkranz mit beispielsweise sechsundachtzig Zähnen ausgeführt. In dem oberen Abschnitt 11 ist eine Abtrageeinrichtung 7 entlang der Längsachse des Reaktionsraums 1 verfahrbar angeordnet. Diese besteht aus einem Abtragekopf 71 aus Polytetrafluorethylen (Teflon^{®} der Firma DuPont de Nemours GmbH) und einem Rundstab 72 aus Edelstahl, an welchem der Abtragekopf 71 mit einer Mutter 73 befestigt ist. Der Abtragekopf 71 weist eine Öffnung 711 auf, durch welche die Einlassleitung 21 geführt ist. Weitere Öffnungen 712, 713 in dem Abtragekopf 71 ermöglichen den Durchtritt einer gasförmigen Substanz. Die Öffnungen 711, 712, 713 sowie die Verbindung zu dem Rundstab 72 sind in einem mittleren Bereich 714 des Abtragekopfes 71 angeordnet, welcher dicker ist als der Rand 715 des Abtragekopfes 71. Beispielsweise kann der innere Bereich 714 eine Dicke von 6 mm und der Rand 715 eine Dicke von 0,5 mm aufweisen. Der Durchmesser des Abtragekopfes 71 ist um 1 mm größer als der Innendurchmesser des deckenseitigen mittleren Abschnitts 12. Ein Verfahren der Abtrageeinrichtung ist durch Deformation des Randes 715 des Abtragekopfes 71 möglich.

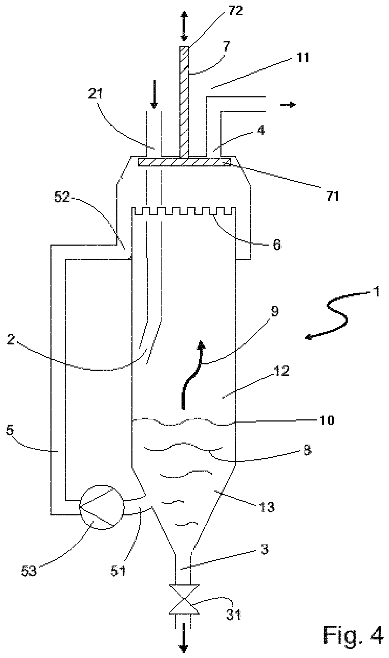

Eine andere Ausführungsform des erfindungsgemäßen Verfahrens ist in Fig. 4 dargestellt. Während sich die Einlassöffnung 2 in der ersten Ausführungsform unmittelbar über dem unteren Abschnitt 13 befindet, ist diese in der Ausführungsform gemäß Fig. 4 im in der Mitte des mittleren Abschnitts 12 angeordnet. Zur Durchführung des erfindungsgemäßen Verfahrens sind die beiden Rücklauföffnungen 51, 52 mit einer Rücklaufleitung 5 miteinander verbunden. In der Rücklaufleitung 5 ist eine Pumpe 53 angeordnet, die eingerichtet ist, um eine Flüssigkeit von der ersten Rücklauföffnung 51 zu der zweiten Rücklauföffnung 52 zu transportieren.

In einer Ausführungsform des erfindungsgemäßen Verfahrens zur Synthese eines Polymers (speziell des Polyamids PA 6T/6I) wird eine Oligomerschmelze 8 durch die Einlassöffnung 2 in den Reaktionsraum 1 eingeführt und sammelt sich im unteren Abschnitt 13 und im unteren Teil des mittleren Abschnitts 12 des Reaktionsraums 1. Ein Teil der Oligomerschmelze 8 wird mittels der Pumpe 53 durch die Rücklaufleitung 5 in einen deckenseitigen Bereich des mittleren Abschnitts 12 des Reaktionsraums 1 transportiert und von dort aus mittels der Verteileinrichtung 6 so über die Innenwand des mittleren Abschnitts 12 verteilt, dass dieser komplett von einem dünnen Oligomerschmelzenfilm abgedeckt wird. Die zurückgeführte Oligomerschmelze, welche sich in einer Rücklaufleitung 5 in einem deckenseitigen Bereich des mittleren Abschnitts 12 des Reaktionsraums 1 oder an den Wänden des mittleren Abschnitts 12 befindet, macht 10 Gewichtsprozent der gesamten im Reaktionsraum 1 befindlichen Oligomerschmelze aus. Es erfolgt eine Polymerisation der Oligomerschmelze 8 zu einer Polymerschmelze und diese wird bei geöffnetem Auslasshahn 31 durch die erste Auslassöffnung 3 aus dem Reaktionsraum 1 entfernt. Wasser verlässt den Reaktionsraum 1 bei vermindertem Druck in gasförmigem Aggregatzustand 9 durch die zweite Auslassöffnung 4. Die Bildung von Ablagerungen in einem deckenseitigen Bereich des mittleren Abschnitts 12 des Reaktionsraums 1 wird durch eine Bewegung der Abtrageeinrichtung 7 verhindert.

Das erfindungsgemäße Verfahren kann als Batch-Prozess geführt werden, wobei nach Abschluss der Reaktion die Polymerschmelze durch Öffnen des Absperrhahns 31 aus dem Reaktionsraum 1 entnommen wird. Alternativ ist auch eine kontinuierliche Verfahrensführung bei ständig zumindest teilweise geöffnetem Absperrhahn 31 möglich, wobei die Verweilzeit der Oligomerschmelze im Reaktionsraum 1 durch ihr Niveau eingestellt werden kann.

Zum Vergleich des erfindungsgemäßen Verfahrens mit einer herkömmlichen Verfahrensführung im Fallfilmreaktor wurden in einer Vorrichtung gemäß Fig. 4 die erfindungsgemäßen Verfahrensführungen B1 bis B7 den Vergleichsversuchen VB1 bis VB9 gegenübergestellt, in welchen die Pumpe 53 abgeschaltet war. Hierdurch erfolgte kein Rücklauf einer Flüssigkeit durch die Rücklaufleitung 5, sodass die Situation im herkömmlichen Fallfilmreaktor simuliert werden konnte. Als Modellsubstanz für eine Oligomerschmelze wurden wässrige Lösungen von Polyvinylpyrrolidon (Luviskol^{®} der Firma BASF SE) unterschiedlicher Viskositäten eingesetzt. Als gasförmige Substanz wurde diesen CO₂ in unterschiedlichen Massenanteilen jeweils bezogen auf die Gesamtmasse der Lösung zugesetzt. Die Verfahrensführung erfolgt bei Raumtemperatur und Normaldruck. Die Ergebnisse sind in den Tabellen 1 und 2 dargestellt:

**Tabelle 1**

| Nr. | Viskosität [mPa·s] | c(CO₂) [Gew.%] | Rücklauf [kg/h] | Ablagerungen |
|---|---|---|---|---|
| VB1 | 100 | 1 | - | ja |
| VB2 | 100 | 2 | - | ja |
| VB3 | 100 | 3 | - | ja |
| VB4 | 200 | 1 | - | ja |
| VB5 | 200 | 2 | - | ja |
| VB6 | 200 | 3 | - | ja |
| VB7 | 400 | 1 | - | ja |
| VB8 | 400 | 2 | - | ja |
| VB9 | 400 | 3 | - | ja |

**Tabelle 2**

| Nr. | Viskosität [mPa·s] | c(CO₂) [Gew.%] | Rücklauf [kg/h] | Ablagerungen |
|---|---|---|---|---|
| B1 | 700 | 1 | 1 | nein |
| B2 | 700 | 2 | 1 | nein |
| B3 | 700 | 3 | 1 | nein |
| B4 | 700 | 1 | 5 | nein |
| B5 | 10.000 | 1 | 1 | nein |
| B6 | 10.000 | 2 | 1 | nein |
| B7 | 10.000 | 3 | 1 | nein |

Es ist zu erkennen, dass die Bildung von Ablagerungen in einem deckenseitigen Bereich des mittleren Abschnitts 12 des Reaktionsraums 1 nur bei der erfindungsgemäßen Verfahrensführung vermieden werden konnte. In den Vergleichsversuchen und in den erfindungsgemäßen Versuchen kommt es zu einer Schaumbildung im mittleren Abschnitt 12, die allerdings nach maximal 10 Minuten ihr Maximum erreicht und dann konstant bleibt. Das erfindungsgemäße Verfahren ermöglicht eine zuverlässige Polymersynthese unter Entfernung einer gasförmigen Substanz in dem Fallfilmreaktor, ohne dass es hierbei, wie im Stand der Technik bekannt, zu Ablagerungen an den Innenwänden des Reaktionsraumes oberhalb der Verteileinrichtung des Fallfilmreaktors kommen würde.

### Bezugszeichenliste

- 1: Reaktionsraum
- 2: Einlassöffnung
- 3: erste Auslassöffnung
- 4: zweite Auslassöffnung
- 5: Rücklaufleitung
- 6: Verteileinrichtung
- 7: Abtrageeinrichtung
- 8: Oligomerschmelze
- 9: gasförmige Substanz
- 10: Flüssigkeitsniveau
- 11: oberer Abschnitt
- 12: mittlerer Abschnitt
- 13: unterer Abschnitt
- 21: Einlassleitung
- 31: Absperrhahn
- 51: erste Rücklauföffnung
- 52: zweite Rücklauföffnung
- 53: Pumpe
- 71: Abtragekopf
- 72: Rundstab
- 73: Mutter
- 711: Öffnung für Einlassleitung
- 712: Durchtrittsöffnung
- 713: Durchtrittsöffnung
- 714: mittlerer Bereich des Abtragekopfes
- 715: Rand des Abtragekopfes

## Patentansprüche

1. Kontinuierliches Verfahren zur Synthese eines Polymers unter Abscheidung einer gasförmigen Substanz in einer Vorrichtung umfassend
- einen Reaktionsraum (1), der einen oberen Abschnitt (11), einen mittleren Abschnitt (12) und einen unteren Abschnitt (13) aufweist,
- eine Einlassöffnung (2) die in dem mittleren Abschnitt (12) angeordnet ist,
- eine erste Auslassöffnung (3), die in dem unteren Abschnitt (13) angeordnet ist,
- eine zweite Auslassöffnung (4), die im oberen Abschnitt (11) angeordnet ist,
- eine erste Rücklauföffnung (51), die in dem unteren Abschnitt (13) angeordnet ist,
- eine zweite Rücklauföffnung (52), die unterhalb des oberen Abschnitts (11) angeordnet ist, wobei die erste Rücklauföffnung (51) und die zweite Rücklauföffnung (52) durch eine Rücklaufleitung (5) miteinander verbunden sind, in der eine Pumpe (53) angeordnet ist, die dazu eingerichtet ist, um eine Flüssigkeit von der ersten Rücklauföffnung (51) zu der zweiten Rücklauföffnung (52) zu transportieren,
- eine Verteileinrichtung (6), die den mittleren Abschnitt (12) zu dem oberen Abschnitt (11) abgrenzt, und
- eine Abtrageeinrichtung (7), die entlang des oberen Abschnitts (11) verfahrbar angeordnet ist, wobei die Abtrageeinrichtung (7) einen Abtragekopf (71) aufweist, der an der deckenseitigen Innenwand des mittleren Abschnitts (12) angeordnet ist und wobei der Abtragekopf (71) die deckenseitige Innenwand des mittleren Abschnitts (12) unter Deformation der Ränder des Abtragekopfes (71) kontaktiert, wobei
- die Einlassöffnung (2) mittels einer Einlassleitung (21) mit einer Wand des oberen Abschnitts (11) verbunden ist, wobei der Abtragekopf (71) eine Öffnung (711) aufweist, durch welche die Einlassleitung (21) geführt ist,
mit den folgenden Verfahrensschritten:
a) Zuführen einer Präpolymerschmelze (8) in einen mittleren Abschnitt (12) eines Reaktionsraums (1) durch eine Einlassöffnung (2),
b) Transportieren eines Teils der Präpolymerschmelze (8) aus einem unterhalb des mittleren Abschnitts (12) angeordneten unteren Abschnitt (13) des Reaktionsraums (1) in einen oberen Abschnitt (11) des Reaktionsraums oberhalb des mittleren Abschnitts (12) und Verteilen der Präpolymerschmelze (8) über die Innenwand des mittleren Abschnitts (12) mittels einer Verteileinrichtung (6),
c) Polymerisation der Präpolymerschmelze (8) zu einer Polymerschmelze,
d) Entfernen der Polymerschmelze aus dem Reaktionsraum (1) durch eine erste Auslassöffnung (3) des Reaktionsraums (1), und
e) Entfernen einer gasförmigen Substanz (9) aus dem Reaktionsraum (1) durch eine zweite Auslassöffnung (4) in dem oberen Abschnitt (11),
**dadurch gekennzeichnet, dass** Ablagerungen an mindestens einer Innenwand des oberen Abschnitts (11) von einer Abtrageeinrichtung (7) entfernt werden.

2. Verfahren nach Anspruch 1, **dadurch gekennzeichnet, dass** die Viskosität der Präpolymerschmelze (8) mindestens 1 mPas beträgt.

3. Verfahren nach Anspruch 1 oder 2, **dadurch gekennzeichnet, dass** das Polymer ausgewählt ist unter thermoplastischen Polymeren, bevorzugt Polyamiden, thermoplastischen Polyurethanen, Polyolefinen, vinylaromatischen Polymeren, Polyestern, Polyacetalen, Polycarbonaten, Polysulfonen, Polyethersulfonen und Mischungen davon.

4. Verfahren nach einem der Ansprüche 1 bis 3, **dadurch gekennzeichnet, dass** das Polymer ein Polyamid ist und die gasförmige Substanz (9) Wasserdampf ist.

5. Verfahren nach einem der Ansprüche 1 bis 4, **dadurch gekennzeichnet, dass** das Polymer ein teilaromatisches Polyamid ist, das wenigstens eine Wiederholungseinheit mit einer aromatischen Gruppen und wenigstens eine Wiederholungseinheit mit einer aliphatischen oder cycloaliphatischen Gruppe eingebaut enthält.

6. Verfahren nach einem der Ansprüche 4 oder 5, **dadurch gekennzeichnet, dass** das Polymer ein Polyamid ist, ausgewählt unter
PA 6.T, PA 9.T, PA8.T, PA 10.T, PA 12.T,
PA 6.I, PA 8.I, PA 9.I, PA 10.I, PA 12.I, PA 6.T/6, PA 6.T/10, PA 6.T/12,
PA 6.T/6.I, PA6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.I, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T,
PA 6.T/12.T/IPDA.T, PA 6.T/10.T/PACM.T, PA 6.T/12.T/PACM.T,
PA 10.T/IPDA.T, PA 12.T/IPDA.T und Copolymeren und Gemischen davon.

## Claims

1. A continuous process for synthesizing a polymer with separation of a gaseous substance in an apparatus comprising
- a reaction space (1) having an upper section (11), a middle section (12) and a lower section (13),
- an inlet orifice (2) disposed in the middle section (12),
- a first outlet orifice (3) disposed in the lower section (13),
- a second outlet orifice (4) disposed in the upper section (11),
- a first return orifice (51) disposed in the lower section (13),
- a second return orifice (52) disposed beneath the upper section (11), where the first return orifice (51) and the second return orifice (52) are connected to one another by a return line (5) in which there is disposed a pump (53) set up to transport a liquid from the first return orifice (51) to the second return orifice (52),
- a distributing device (6) which delimits the middle section (12) from the upper section (11), and
- a removal device (7) disposed so as to be movable along the upper section (11), where the removal device (7) has a removal head (71) disposed on the inner wall at the top of the middle section (12) and where the removal head (71) makes contact with the inner wall at the top of the middle section (12) with deformation of the edges of the removal head (71), where
- the inlet orifice (2) is connected by means of an inlet line (21) to a wall of the upper section (11), the removal head (71) having an orifice (711) through which the inlet line (21) is conducted,
having the following process steps:
a) feeding a prepolymer melt (8) into a middle section (12) of a reaction space (1) through an inlet orifice (2),
b) transporting a portion of the prepolymer melt (8) from a lower section (13) of the reaction space (1) disposed below the middle section (12) into an upper section (11) of the reaction space above the middle section (12) and distributing the prepolymer melt (8) over the inner wall of the middle section (12) by means of a distributing device (6),
c) polymerizing the prepolymer melt (8) to give a polymer melt,
d) removing the polymer melt from the reaction space (1) through a first outlet orifice (3) of the reaction space (1), and
e) removing a gaseous substance (9) from the reaction space (1) through a second outlet orifice (4) in the upper section (11),
wherein deposits on at least one inner wall of the upper section (11) are removed by a removal device (7).

2. The process according to claim 1, wherein the viscosity of the prepolymer melt (8) is at least 1 mPas.

3. The process according to claim 1 or 2, wherein the polymer is selected from thermoplastic polymers, preferably polyamides, thermoplastic polyurethanes, polyolefins, vinylaromatic polymers, polyesters, polyacetals, polycarbonates, polysulfones, polyether sulfones and mixtures thereof.

4. The process according to any of claims 1 to 3, wherein the polymer is a polyamide and the gaseous substance (9) is steam.

5. The process according to any of claims 1 to 4, wherein the polymer is a semiaromatic polyamide comprising at least one repeat unit having an aromatic group and at least one repeat unit having an aliphatic or cycloaliphatic group in incorporated form.

6. The process according to either of claims 4 and 5, wherein the polymer is a polyamide selected from
PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T and copolymers and mixtures thereof.

## Revendications

1. Procédé continu pour la synthèse d'un polymère avec séparation d'une substance gazeuse dans un dispositif comprenant
- une chambre de réaction (1), qui présente une section supérieure (11), une section centrale (12) et une section inférieure (13),
- un orifice d'admission (2) qui est disposé dans la section centrale (12),
- un premier orifice de sortie (3) qui est disposé dans la section inférieure (13),
- un deuxième orifice de sortie (4) qui est disposé dans la section supérieure (11),
- un premier orifice de retour (51) qui est disposé dans la section inférieure (13),
- un deuxième orifice de retour (52), qui est disposé sous la section supérieure (11), le premier orifice de retour (51) et le deuxième orifice de retour (52) étant reliés l'un à l'autre via une conduite de retour (5), dans laquelle est disposée une pompe (53) conçue pour transporter un liquide du premier orifice de retour (51) au deuxième orifice de retour (52),
- un dispositif de distribution (6), qui délimite la section centrale (12) par rapport à la section supérieure (11) et
- un dispositif d'enlèvement (7), qui est disposé de manière mobile le long de la section supérieure (11), le dispositif d'enlèvement (7) présentant une tête d'enlèvement (71) qui est disposée au niveau de la paroi interne côté plafond de la section centrale (12) et la tête d'enlèvement (71) étant en contact avec la paroi interne côté plafond de la section centrale (12) avec déformations des bords de la tête d'enlèvement (71),
- l'orifice d'admission (2) étant relié au moyen d'une conduite d'admission (21) à une paroi de la section supérieure (11), la tête d'enlèvement (71) présentant un orifice (711) à travers lequel la conduite d'admission (21) est guidée,
présentant les étapes de procédé suivantes :
a) introduction d'une masse fondue (8) de prépolymère dans une section centrale (12) d'une chambre de réaction (1) à travers un orifice d'admission (2),
b) transport d'une partie de la masse fondue (8) de prépolymère hors d'une section inférieure (13) disposée sous la section centrale (12) de la chambre de réaction (1) dans une section supérieure (11) de la chambre de réaction au-dessus de la section centrale (12) et distribution de la masse fondue (8) de prépolymère sur la paroi interne de la section centrale (12) au moyen d'un dispositif de distribution (6),
c) polymérisation de la masse fondue (8) de prépolymère en une masse fondue de polymère,
d) élimination de la masse fondue de polymère de la chambre de réaction (1) via un premier orifice de sortie (3) de la chambre de réaction (1) et
e) élimination d'une substance gazeuse (9) de la chambre de réaction (1) via un deuxième orifice de sortie (4) dans la section supérieure (11),
**caractérisé en ce que** des dépôts sur au moins une paroi interne de la section supérieure (11) sont éliminés par un dispositif d'enlèvement (7).

2. Procédé selon la revendication 1, **caractérisé en ce que** la viscosité de la masse fondue (8) de prépolymère est d'au moins 1 mPa.s.

3. Procédé selon la revendication 1 ou 2, **caractérisé en ce que** le polymère est choisi parmi les polymères thermoplastiques, de préférence les polyamides, les polyuréthanes thermoplastiques, les polyoléfines, les polymères aromatiques de vinyle, les polyesters, les polyacétals, les polycarbonates, les polysulfones, les polyéthersulfones et leurs mélanges.

4. Procédé selon l'une quelconque des revendications 1 à 3, **caractérisé en ce que** le polymère est un polyamide et la substance gazeuse (9) est de la vapeur d'eau.

5. Procédé selon l'une quelconque des revendications 1 à 4, **caractérisé en ce que** le polymère est un polyamide partiellement aromatique, dans lequel sont incorporées au moins une unité récurrente présentant un groupe aromatique et au moins une unité récurrente présentant un groupe aliphatique ou cycloaliphatique.

6. Procédé selon l'une quelconque des revendications 4 ou 5, **caractérisé en ce que** le polymère est un polyamide choisi parmi
PA 6.T, PA 9.T, PA8.T, PA 10.T, PA 12.T,
PA 6.I, PA 8.I, PA 9.I, PA 10.I, PA 12.I, PA 6.T/6, PA 6.T/10, PA 6.T/12,
PA 6.T/6.1, PA6.T/B.T, PA 6.T/9.T, PA 6.T/10T, PA 6.T/12.T, PA 12.T/6.T,
PA 6.T/6.1/6, PA 6.T/6.1/12, PA 6.T/6.1/6.10, PA 6.T/6.1/6.12, PA 6.T/6.6,
PA 6.T/6.10, PA 6.T/6.12, PA 10.T/6, PA 10.T/11, PA 10.T/12, PA 8.T/6.T,
PA 8.T/66, PA 8.T/8.I, PA 8.T/8.6, PA 8.T/6.I, PA 10.T/6.T, PA 10.T/6.6,
PA 10.T/10.I, PA 10T/10.I/6.T, PA 10.T/6.I, PA 4.T/4.I/46, PA 4.T/4.I/6.6,
PA 5.T/5.1, PA 5.T/5.I/5.6, PA 5.T/5.I/6.6, PA 6.T/6.I/6.6, PA MXDA.6,
PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T,
PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T,
PA 6.T/12.T/IPDA.T, PA 6.T/10.T/PACM.T, PA 6.T/12.T/PACM.T,
PA 10.T/IPDA.T, PA 12.T/IPDA.T
et leurs copolymères et mélanges.
